# EUROPEAN PATENT APPLICATION

(11) **EP 2 249 117 A1**
(43) Date of publication of application: **10.11.2010**
(21) Application number: 09168808.5
(22) Date of filing: 27.08.2009
(51) Int. Cl.: F41G 3/26

(54) **Shooting training systems using an embedded photo sensing panel**

(30) Priority: 22.04.2009 US 428439
(71) Applicant: Integrated Digital Technologies, Inc., Science-Based Industrial Park Hsinchu (TW)
(72) Inventor: Chai, Fu-Yuan, 23443 Taipei (TW); Lee, Chun-Yuan, 90742 Pingtung County (TW)
(74) Representative: Gee, Steven William

(57) **Abstract**

A shooting training system includes a display device for displaying visual information on a display area, wherein the display device is embedded with photo sensors for receiving a first user input from a first input device transmitted to and directed to a first location on the display area; and a computing device coupled with the display device, wherein the computing device is configured to instruct the display device to display a shooting-training environment; process the first user input to identify at least the location of the first user input relative to the display area and a timing of the first user input; and display training results based on the location and timing of the first user input.

## Description

### TECHNICAL FIELD

Systems and methods disclosed herein relate to the field of interactive shooting training.

### BACKGROUND INFORMATION

Video games involving first person shooters, including those playable in arcades or through adapters on home television sets, have become very popular. These target shooting games provide entertainment by imitating shooting environments in which one or more players shoot at fixed targets using imitation weapons. These target shooting games also function to train police or military personnel in improving their skills in aiming and firing shotguns, rifles, handguns, and other weapons. Such games and devices entertain, train, and instruct shooters by providing a safe and convenient environment, either indoors or outdoors, without actually making use of tangible projectiles (e.g. shot charges or bullets).

In most conventional shooting games, the gun does not fire a "projectile." Rather, targets are disposed at known predetermined locations, and whether a target is "hit" is determined by whether the gun is aimed at the target location. In doing so, the orientation of the gun is measured in order to determine whether or not the aimed direction extrapolates to the location of a target. However, because the actual aim of the gun is estimated based on its orientation, the accuracy of this type of shooting game is limited. Moreover, extensive calibration of the game system is often needed in advance in order to provide acceptable measurements of the gun's aimed locations.

Conventional shooting games are further limited in that they do not distinguish between inputs originating from different users, nor do they account for the possibility that multiple inputs originate from different sources. Moreover, conventional shooting games seldom provide a realistic shooting environment. Accordingly, there exists a need for a comprehensive virtual interactive shooting system that provides better accuracy in measurements, eliminates the need for tedious calibrations, distinguishes between multiple inputs, and more closely resembles an actual shooting environment.

### SUMMARY

In accordance with the invention, there is provided a system including a display device for displaying visual information on a display area, wherein the display device is embedded with photo sensors for receiving a first user input from a first input device transmitted to and directed to a first location on the display area; and a computing device coupled with the display device, wherein the computing device is configured to instruct the display device to display a shooting-training environment; process the first user input to identify at least the location of the first user input relative to the display area and a timing of the first user input; and display training results based on the location and timing of the first user input.

Also in accordance with the invention, there is provided a method for a shooting training system including displaying visual information on a display area, wherein the display device is embedded with photo sensors for receiving a first user input from a first input device transmitted to and directed to a first location on the display area; instructing the display device to display a shooting-training environment; processing the first user input to identify at least the location of the first user input relative to the display area and a timing of the first user input; and displaying training results based on the location and timing of the first user input.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this specification, illustrate various embodiments. In the drawings:

Fig. 1 illustrates an exemplary interactive shooting training system consistent with certain disclosed embodiments.

Fig. 2 shows an exemplary block diagram of an interactive shooting training system consistent with certain disclosed embodiments.

Fig. 3 illustrates an exemplary process of input analysis, consistent with certain disclosed embodiments.

Fig. 4 illustrates an exemplary controller, consistent with certain disclosed embodiments.

### DESCRIPTION OF THE EMBODIMENTS

The following descriptions, for purposes of explanation and without limiting the scope of the invention, provide exemplary techniques and embodiments consistent with the invention. Certain sequences of steps, interfaces, and configurations may be illustrated to provide understanding of the techniques presented herein. While the techniques and embodiments will primarily be described in context with the accompanying drawings, those skilled in the art will further appreciate that the techniques and embodiments can also be practiced in other display systems or can be modified depending on system design or applicants.

Reference will now be made in detail to exemplary embodiments of the invention, examples of which are illustrated in the accompanying drawings. Wherever possible, the same reference numbers are used throughout the drawings to refer to the same or like parts.

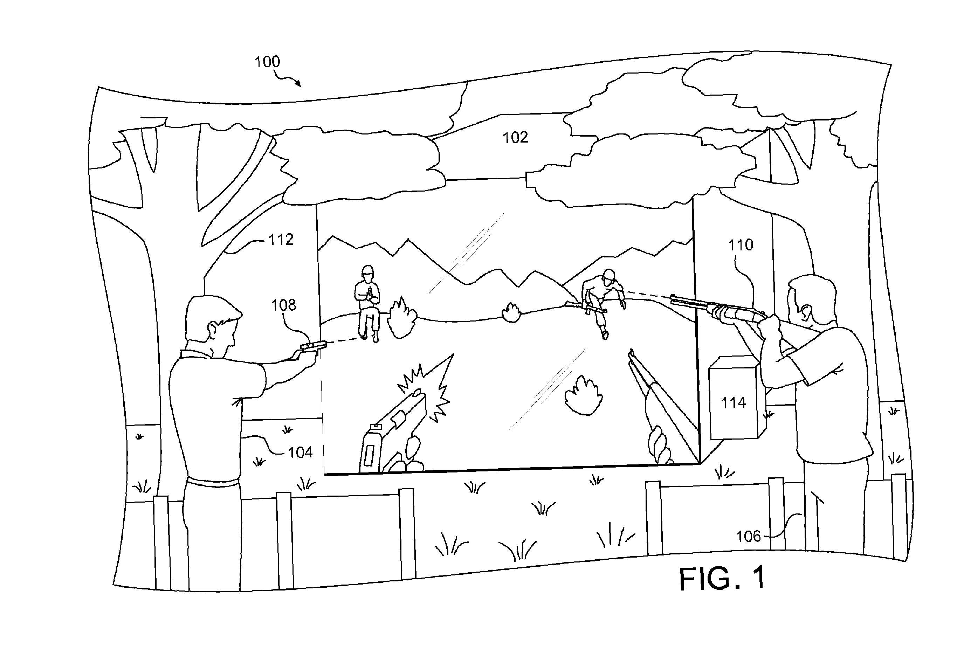

Fig. 1 illustrates an exemplary interactive shooting training system 100. System 100 includes an interactive module 102 that receives inputs from a first user 104 and a second user 106 operating controllers 108 and 110, respectively. System 100 can be used to simulate hunting, military or police combat shooting, or target practice at any simulated distance. If system 100 is used in a dedicated space for entertainment or for training purposes, it may also include additional arrangements and decorations 112 to provide a more realistic, continuous training or gaming environment. When system 100 is used as a mobile unit, on the other hand, it requires minimal assembly and offers enhanced mobility. System 100 also includes a host 114, which may be connected to interactive module 102. One of ordinary skill in the art would recognize that system 100 may include any number of users and controllers, such as one user operating two controllers, or three users each operating one controller.

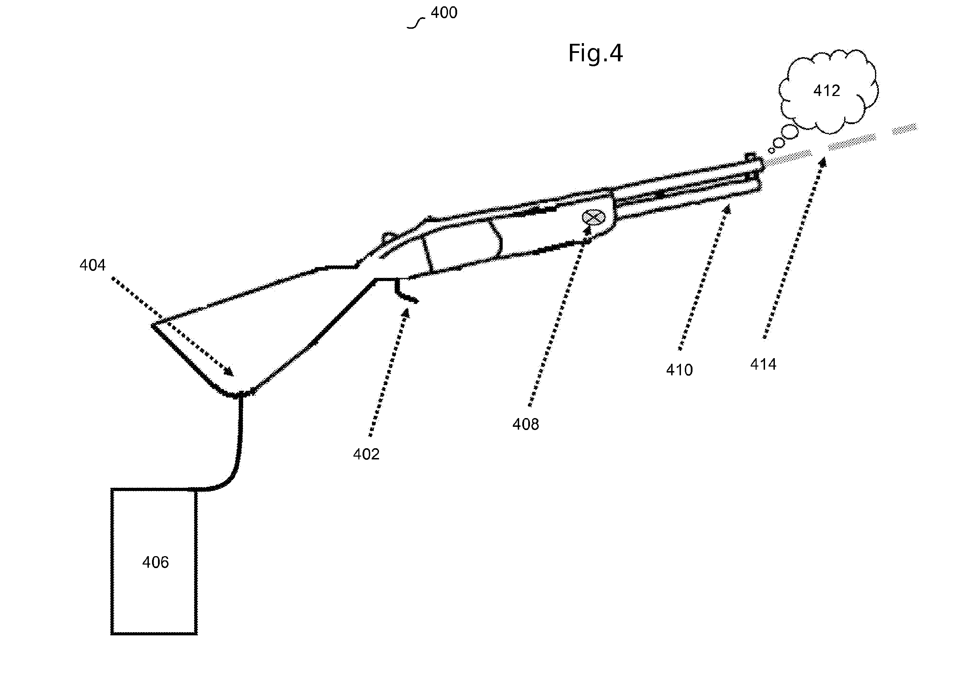

Users 104 and 106 direct inputs at the display area of interactive module 102 via controllers 108 and 110. Controllers 108 and 110 may be imitation weapons including, but not limited to handguns, military firearms, machine guns, autocannon guns, artillery guns, tank guns, airsoft guns, BB guns, paintball guns, water guns, arrows, grenades, and rocket launchers. In one embodiment consistent with the present invention, controllers 108 and 110 are imitation weapons that contain compressed gas mechanisms which produce motions simulating recoils of actual guns during firing. Such motions may be accompanied by other effects including sound, light, and faux gun smoke. Controllers 108 and 110 may implement these effects, including recoil motions, upon direct user actions (e.g., pulling the triggers of controllers 108 and 110), and need not await for instructions from interactive module 102 or host 114. An exemplary embodiment of controllers 108 and 110 will be described later in connection with Fig. 4.

Controllers 108 and 110 transmit signals to interactive module 102 in the form of energy beams (dotted lines in Fig. 1). Examples of energy types that may be used by controllers 108 and 110 include, but are not limited to, infrared, invisible or visible light, microwave radiation, magnetic energy, acoustic energy, laser, and heat. In accordance with one embodiment of the invention, users 102 and 104 provide inputs by pulling imitation triggers on controllers 108 and 110. Controllers 108 and 110 may also be actual unloaded weapons adapted to output energy beams when their triggers are pulled. Alternatively, controllers 108 and 110 may constitute actual objects resembling grenades or arrows which users may physically throw at the display area.

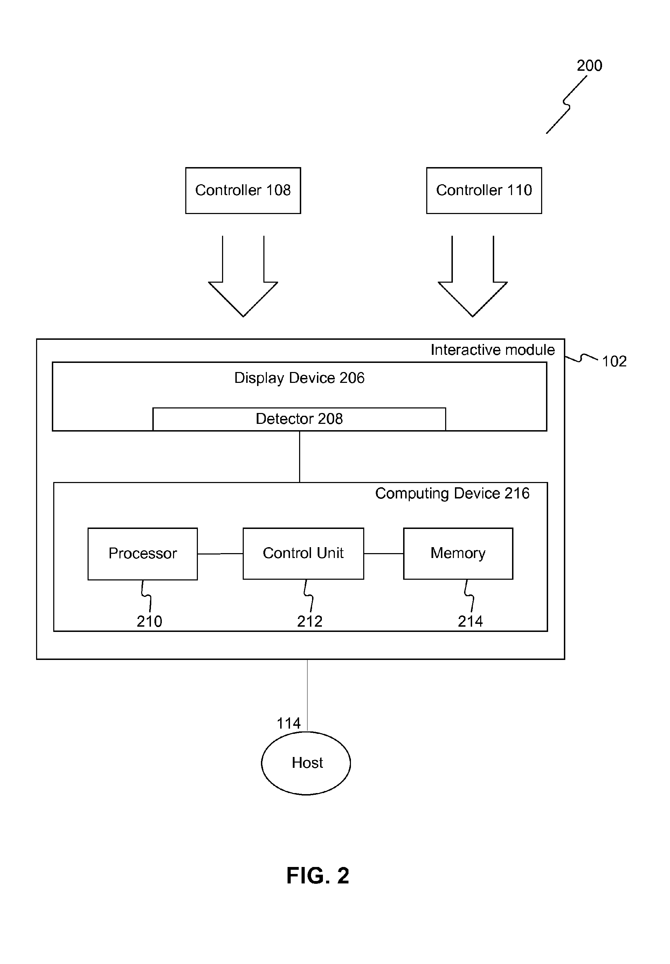

Fig. 2 shows a block diagram 200 illustrating interactive module 102 in accordance with an exemplary embodiment of the present invention. In diagram 200, interactive module 102 receives one or more inputs from controllers 108 and 110, and includes a display device 206, a detector 208, a processor 210, a control unit 212, and a memory 214. One of ordinary skilled the art would recognize that interactive module 102 may include many other components not shown in Fig. 2, including audio recording components and other output components.

Together, processor 210, control unit 212, and memory 214 form computing device 216, which functions to, in part, provide an interactive simulated shooting environment. For example, depending on the system's designs or applications, computing device 216 may provide signals to the display device for displaying a shooting-training environment via host 114, process inputs received from at least one of controllers 108 and 110, identify at least the location and timing of at least one input, and instruct display device 206, via host 114, to display shooting or training results based on the identified location and timing. In accordance with one embodiment of the present invention, the shooting-training environment is an animated scene having at least a static target and a moving target.

Interactive module 102 may be a stand-alone interactive display device, or it may be an interactive device compatible with, attached to, or formed as a component of any number of different types of devices, such as host 114. Host 114 may be, for example, video game systems, televisions, digital displays, personal digital assistants, computers, laptops, servers, digital picture frames, cellular phones, projectors, CD/DVD systems, and stereo systems. A wide number and range of applications are envisioned for the present invention and discussion of particular applications throughout this specification should in no way be seen as limiting.

Display device 206 is adapted to display information in the form of static images, video images, text, or any other type of graphics. The information displayed by display device 206 may be used to inform a user of the system and/or form part of a user interface. The user may interact with the user interface to instruct the system to perform certain functions or tasks.

Display device 206 may incorporate a display area formed as a part of interactive module 102, as exemplified in Fig. 1, or it may provide an output to display videos and images on host 114 which includes a display area. The display area incorporated in or attached to display device 206 may be a liquid crystal display ("LCD") screen. Those skilled in the art will appreciate, however, that any type of display screen may be used in conjunction with the disclosed embodiments. For example, other types of display screens may be used, such as light-emitting-diode (LED) -based display, organic light-emitting diode/display ("OLED"), cathode ray technology, other thin film transistor ("TFT") displays, plasma display panels ("PDP"), electroluminescence display, etc.

If display device 206 incorporates a display area, as is shown in Fig. 2, detector 208 may be formed as built-in sensors embedded within display device 206. Detector 208 is configured with any of existing hardware and/or software components capable of detecting various characteristics of the inputs provided by controllers 108 and 110 directed at the display area, including their locations and timings. Other characteristics of the inputs that may be detected by detector 208 include wavelength, pulse frequency, durations, timing, intensity, modulation scheme, input patterns, temperature, size.

Processor 210 receives and processes data detected by detector 208. Among other functions, processor 210 distinguishes between inputs received from multiple users based on the various characteristics detected by detector 208. Processor 210 may be a pre-configured logic or circuitry or a programmable logic device, such as a microprocessor.

Control unit 212 performs a variety of control tasks including controlling numerous components of interactive shooting training system 100. For example, control unit 212 may adjust the input detection sensitivity of detector 208. Control unit 212 may also adjust various parameters of display device 206 including display, power, input detection sensitivity, and output. In accordance with one embodiment of the invention, control unit 212 changes the training environment that is displayed by display device 206 in response to a user input. Additionally, control unit 212 may control parameters of controllers 108 and 110. For example, upon detection of inputs provided by controllers 108 and 110, control unit 212 may instruct controllers 108 and 110 to provide outputs in the form of light, heat, sound, or movement. Additionally, control unit 212 controls host 114 connected to or incorporating interactive module 102.

Memory 214 may include any or all forms of non-volatile or volatile memory. In various embodiments, different memory devices may be used, including, by way of example, semiconductor memory devices, such as EPROM, RAM, ROM, DRAM, EEPROM, and flash memory devices; magnetic disks such as internal hard disks and removable disks; and optical discs including CD-ROMs, DVDs, and BLU-RAY discs. In some embodiments, memory 214 may store or provide data, such as inputs detected by detector 208, and various information and instructions for components within interactive module 102 including processor 210 and control unit 212. Memory 214 may also include computer-readable storage medium including application/game programs, code, and/or instructions that may be executed on processor 210 during performance of various tasks performed. Additionally, memory 214 may store data from on host 114, and/or provide data to host 114.

As described earlier, when inputs provided by controllers 108 and 110 are detected by detector 208, processor 210 determines the respective sources of the inputs. Once processor 210 identifies inputs with their respective controllers, control unit 212 performs a variety of tasks using information provided by detector 208, processor 210, and memory 214. For example, control unit 212 may instruct display device 206 to display, in response to inputs originating from controller 108, a first graphic in the location of those inputs on the display area, and to display, in response to inputs originating from controller 110, a second graphic, different than the first graphic, in the location of those inputs on the display area. As another example, control unit 212 may instruct controllers 108 and 110 to vibrate or move in a manner resembling recoil and/or discharge smoke from the gun barrel upon detection and identification of inputs originating from that controller. Control unit 212 may also instruct interactive module 102 or host 114 to output unique sounds corresponding to the one or multiple sources of input, such as gunfire. Finally, control unit 212 may instruct display device 206 to continuously display training statistics including on-target or off-target indication, shooting accuracy, response time, optical locus, simulation statistics, and options or suggestions for further training.

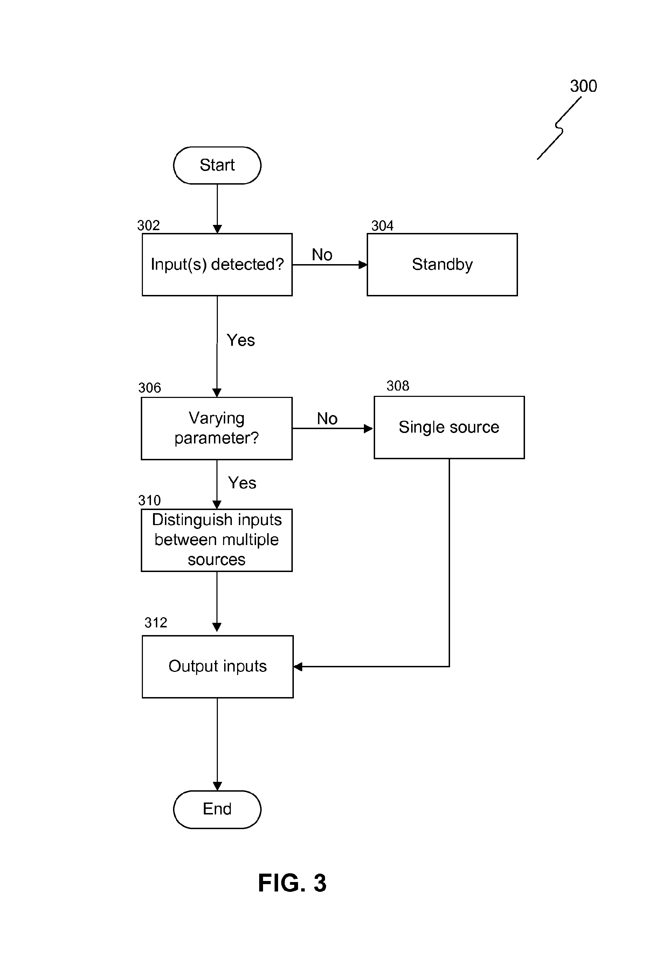

Fig. 3 illustrates an exemplary process 300 consistent with certain disclosed embodiments. In this embodiment, processor 210 may process inputs, either based on the input signals to identify the input location or based on the received signals containing location information from display panel 206 and detector 208.

At step 302, processor 210 may determine whether or not detector 208 has sensed input(s). If detector 208 has not detected any inputs, processor 210 may remain on standby (step 304) and may continue to monitor or receive later inputs. If detector 208 has detected either one or multiple inputs, processor 210 may then analyze the inputs, at step 306, to determine whether a varying parameter exists between the inputs. The varying parameter is a parameter that may distinguish one input from another, and may be in the form of wavelength, flash or pulse frequency, durations, timing, intensity, modulation scheme, input patterns, temperature, size, or optical signal modulations of each input. For example, when users 104 and 106 both provide inputs directed at display device 206 using controllers 108 and 110 providing inputs with different flash or pulse frequencies, processor 210 would consider the differing flash or pulse frequencies to be a varying parameter that distinguishes user 104's inputs from 106's inputs.

If processor 210 analyzes the differences between inputs and finds a varying parameter which distinguishes between input(s) from one source and input(s) from a different source, it determines that multiple players are providing inputs. Accordingly, processor 210 then distinguishes those inputs between players (step 310). Processor 210 may arrive at a similar determination when one player is providing inputs using multiple controllers.

On the other hand, if processor 210 does not find a varying parameter between inputs, it may conclude that a single user is providing inputs (step 308). Processor 210 may conclude this when, for example, the inputs' parameters are identical, or if any differences in parameters between the inputs are inconsistent or insubstantial, and do not qualify as a varying parameter.

Finally, in step 312, processor 210 may output the location and source(s) of inputs once it determines that one or more sources are providing inputs. This information may be stored in memory 214, used by control unit 212 in various functions, or provided to host 114.

Fig. 4 provides an exemplary structure of a controller 108 or 110 that is used with interactive module 102. Fig. 4 illustrates an imitation rifle 400 including imitation gun parts. These imitation gun parts include a trigger 402, as well as other parts including and not limited to stock, barrel, recoil pad, chamber, muzzle, swivels, magazine and magazine catch, rear and front sights, ramrod, and breech. Additionally, imitation rifle 400 includes a generator 404 which is connected to a gas container 406. Alternatively, generator 404 may incorporate gas container 406 as part of a single unit. Rifle 400 also includes a sound unit 408, and a light unit 410. Upon the pulling of trigger 402, generator 404 generates imitation smoke 412 and produces recoil movement, sound unit 408 produces sound, and light unit 410 provides light beam 414 to interactive module 102.

The foregoing description has been presented for purposes of illustration. It is not exhaustive and does not limit the invention to the precise forms or embodiments disclosed. Modifications and adaptations of the invention will be apparent to those of ordinary skill in the art from consideration of the specification and practice of the disclosed embodiments of the invention. For example, an interactive shooting training system in accordance with the present invention may include individual police target practice stations and video arcade stations.

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

## Claims

1. A system comprising:
a display device for displaying visual information on a display area, wherein the display device is embedded with photo sensors for receiving a first user input from a first input device transmitted to and directed to a first location on the display area; and
a computing device coupled with the display device, wherein the computing device is configured to:
instruct the display device to display a shooting-training environment;
process the first user input to identify at least the location of the first user input relative to the display area and a timing of the first user input;
and
display training results based on the location and timing of the first user input.

2. The system of claim 1, wherein the computing device is further configured to process multiple user inputs from one or more users.

3. The system of claim 2, wherein the one or more inputs are provided by simulated weapons operated by one or more users comprising at least one of a hand gun, machine gun, rifle, arrow, and rocket launcher.

4. The system of claim 1, wherein the computing device is further configured to provide signals varying the shooting-training environment in response to the first input.

5. The system of claim 1, wherein the shooting-training environment is an animated shooting-training scene having at least one of a static target and a moving target for shooting training.

6. The system as in claim 1, wherein training results comprise at least one of (1) on-target or off-target indication; (2) on-target or off-target statistics; (3) shooting accuracy; (4) response time; (5) illustration of optical locus; (6) simulation statistics; and (7) options for further training.

7. The system of claim 1, wherein the first user input comprises a light beam projected via at least one of visible light, invisible light, infrared light, and laser from an optical projection device simulated as a first weapon operated by a first user.

8. The system of claim 1, wherein the computing device is further configured to determine whether at least two user inputs originated from a single user or multiple users based on a varying parameter between inputs.

9. The system of claim 1, wherein the computing device is further configured to determine whether at least two user inputs originated from a single user or multiple users based on at least one of (1) the wavelengths of the inputs; (2) the flash or pulse frequencies of the inputs; (3) the durations of inputs; (4) the timings of inputs; (5) the intensities of the inputs; (6) the modulation schemes associated with inputs; and (7) projected input patterns of light beams from the inputs.

10. The system of claim 1, wherein the computing device further comprises a controller that provides instructions to the display device for identifying first user input information including the location and the timing of the first user input.

11. The system of claim 1, wherein the computing device further includes a memory containing software instructions, and the computer device operates in connection with a computer system coupled to an interactive display system comprising the display area connected to the display device.

12. The system of claim 1, further comprising a controller for instructing the first input device to provide, upon identification of a first user input, at least one of 1) movement, 2) sound; and 3) smoke.

13. A method for a shooting training system, comprising:
displaying visual information on a display area, wherein the display device is embedded with photo sensors for receiving a first user input from a first input device transmitted to and directed to a first location on the display area;
instructing the display device to display a shooting-training environment;
processing the first user input to identify at least the location of the first user input relative to the display area and a timing of the first user input; and
displaying training results based on the location and timing of the first user input.

14. The method of claim 13, further comprising processing multiple user inputs from one or more users.

15. The method of claim 14, wherein the one or more inputs are provided by simulated weapons operated by one or more users comprising at least one of a hand gun, machine gun, rifle, arrow, and rocket launcher.

16. The method of claim 13, further comprising varying the shooting-training environment in response to the first input.

17. The method of claim 13, wherein the shooting-training environment is an animated shooting-training scene having at least one of a static target and a moving target for shooting training.

18. The method of claim 13, wherein training results comprise at least one of (1) on-target or off-target indication; (2) on-target or off-target statistics; (3) shooting accuracy; (4) response time; (5) illustration of optical locus; (6) simulation statistics; and (7) options for further training.

19. The method of claim 13, wherein the first user input comprises a light beam projected via at least one of visible light, invisible light, infrared light, and laser from an optical projection device simulated as a first weapon operated by a first user.

20. The method of claim 13, further comprising determining whether at least two user inputs originated from a single user or multiple users based on a varying parameter between inputs.

21. The method of claim 13, further comprising determining whether at least two user inputs originated from a single user or multiple users based on at least one of (1) the wavelengths of the inputs; (2) the flash or pulse frequencies of the inputs; (3) the durations of inputs; (4) the timings of inputs; (5) the intensities of the inputs; (6) the modulation schemes associated with inputs; and (7) projected input patterns of light beams from the inputs.

22. The method of claim 13, further comprising providing instructions to the display device for identifying first user input information including the location and the timing of the first user input.

23. The method of claim 13, further comprising instructing the first input device to provide, upon identification of a first user input, at least one of 1) movement, 2) sound; and 3) smoke.
